# EUROPEAN PATENT SPECIFICATION

(11) **EP 1 139 232 B1**
(45) Date of publication and mention of the grant of the patent: **04.06.2003**
(21) Application number: 00106827.9
(22) Date of filing: 30.03.2000
(51) Int. Cl.: G06F 17/30

(54) **Cache time determination**
Bestimmung der Cachezeit
Détermination du temps de mémorisation en antémémoire

(43) Date of publication of application: 04.10.2001
(73) Proprietor: INTERSHOP Software Entwicklungs GmbH, 07740 Jena (DE)
(72) Inventor: Mallwitz, Christian, 07743 Jena (DE); Gessner, Frank, 07743 Jena (DE); Schambach, Stephan, 07740 Jena (DE); Müller, Ulrike, 07743 Jena (DE); Sarnoch, Roy, 07743 Jena (DE)
(74) Representative: Betten & Resch

(56) References cited:
- WO-A-99/05619
- US-A- 5 787 471
- COHEN E ET AL: "Exploiting regularities in Web traffic patterns for cache replacement" PROCEEDINGS OF THE THIRTY-FIRST ANNUAL ACM SYMPOSIUM ON THEORY OF COMPUTING, PROCEEDINGS OF STOC 99: 31ST ANNUAL SYMPOSIUM ON THEORY OF COMPUTING, ATLANTA, GA, USA, 1-4 MAY 1999, pages 109-118, XP002162123 1999, New York, NY, USA, ACM, USA ISBN: 1-58113-067-8
- DOUGLIS F ET AL: "HPP: HTML macro-preprocessing to support dynamic document caching" PROCEEDINGS OF THE USENIX SYMPOSIUM ON INTERNET TECHNOLOGIES AND SYSTEMS, PROCEEDINGS OF THE USENIX SYMPOSIUM ON INTERNET TECHNOLOGIES AND SYSTEMS, MONTEREY, CA, USA, 8-11 DEC. 1997, pages 83-94, XP002162124 1997, Berkeley, CA, USA, USENIX Assoc, USA ISBN: 1-880446-91-X
- CAO P ET AL: "Cost-aware WWW proxy caching algorithms" PROCEEDINGS OF THE USENIX SYMPOSIUM ON INTERNET TECHNOLOGIES AND SYSTEMS, PROCEEDINGS OF THE USENIX SYMPOSIUM ON INTERNET TECHNOLOGIES AND SYSTEMS, MONTEREY, CA, USA, 8-11 DEC. 1997, pages 193-206, XP002162125 1997, Berkeley, CA, USA, USENIX Assoc, USA ISBN: 1-880446-91-X

## Description

The present invention relates to a method, apparatus and computer program for temporarily storing data from a data base in a cache memory.

A computer system designed for processing online transactions like e-commerce applications over the internet or a similar data network usually comprises a web server which is accessible through a data transmission medium like the internet by a plurality of clients e.g. personal computers, mobile phones or internet TV sets, an application server connected to the web server for carrying out transactions and a data base or file server or a similar organized storage device connected to the application server for holding the necessary data.

For online transaction applications designed for the mass market the load balancing of the hardware resources is vital for offering reliable services to the customer. It is therefore known to additionally provide a cache memory for storing data which are frequently accessed by clients in order to reduce the number of data base access operations. Preferably the cache memory is accessible by the web server. If a client requests some information from the server, the latter checks whether or not the requested data are contained in the cache memory. If this is the case, the web server directly retrieves the data from the cache memory. Since the data access time of the cache memory is shorter than that of the data base and the processing operations of the application server are not required, the transaction can be carried out faster and the load of the application server can be reduced accordingly. The data retrieved from the cache memory are then formatted and outputted to the client by the web server.

The data stored in the cache memory are stored in the form of the output document (medium) prepared for transfer to the client. The time period for which an output document remains in the cache memory is normally determined by a first-in-first-out mode, that is the "oldest" output document in the cache memory is overwritten by the latest document if the cache memory is full. It is also possible to update the whole content of the cache memory in regular intervals or to define fixed storage times after the latest access, e.g. 1 day or 1 week.

The load of a computer system accessing a data base depends on the data volume of an accessed item and the number of access operations, and/or the CPU load to process the data. With the above described methods of storing output data in a cache memory these factors cannot sufficiently be taken into account.

US patent 5,787,471 describes a cache memory management device comprising a time measuring unit for measuring a time period required to obtain data from a data base. The measured time information, which represents an access time of the data is stored together with the data in the cache memory. The data is provided with a link to the access time. When the cache memory reaches its capacity limit the access time information of the respective data sets is compared and the data with the shortest access time is replaced.

It is therefore an object of the present invention to avoid the problems present with the known cache storage methods and to improve and optimize the load balancing of the application server accessing the data base.

According to the present invention a data storage method as defined in claim 1, a computer program as defined in claim 22 and an application server as defined in claim 26 is provided.

According to the invention it is possible to define the storage period of every data set independent of the output medium. It is therefore possible to make the storage time period dependent on suitable parameters, like e.g. on the data quantity of a data set; that is to provide a longer cache period for a larger data set than for a smaller data set since the time and processing resources saved by accessing the cache memory instead of the data base is longer than in the case of a small data set. In addition, the storage period may be adapted to the access frequency of each data set individually. With the present invention it is therefore possible to optimize the load balancing of the application server carrying out the data storage operations. A computer system to which the present invention is applied can thus provide more reliable online transaction services for the customer.

The cache time attribute may be user-defined or defined automatically dependent on computer system parameters like the data quantity of a data set, the access frequency or the current or average load of the computer system or the application server.

The cache time may be defined as a fixed value dependent on a data update cycle of the data base. The cache time may be determined individually for every data set or for specific data set categories. If the cache time is determined for a specific category, the caching time is valid for all data sets which belong to the respective category.

Every data set may be stored separately in the cache memory as a formatted data set. The data sets can be arranged in an output document or template for output to the user.

Alternatively, a plurality of data sets may be stored in the cache memory as part of an output document. The cache time of the output document is preferably determined by the cache time of the data sets contained in the output document. The shortest cache time, the longest cache time or an (arithmetic or geometric) average time of the data set cache times may be selected as the cache time of the output medium. Alternatively, it is also possible to assign different priorities to the data sets. Then, the cache time of the data set having the highest priority is selected as the cache time of the output document.

The output document or output template may be encoded in HTML, XML, WML or any other suitable format for visualization at the client side or for other applications.

The invention and further objects, features and advantages thereof will be more clearly understood from the following description of preferred embodiments thereof and the corresponding drawings, in which:
Figure 1 shows a block diagram of a computer system according to a preferred embodiment of the present invention.
Figure 2 shows a block diagram of a computer system schematically illustrating the operation of a first embodiment of the present invention.
Figure 3 shows a further block diagram of the computer system schematically illustrating the operation of the first embodiment of the present invention.
Figure 4 shows a block diagram of a computer system schematically illustrating the operation of a second embodiment of the present invention.
Figure 5 shows a further block diagram of the computer system schematically illustrating the second embodiment of the present invention.
Figure 6 shows a flow chart illustrating method steps according to the invention for temporarily storing data in a cache memory.
Figure 7 is a flow chart illustrating method steps according to the invention for storing an output document in a cache memory.
Figure 8 is a flow chart illustrating method steps of an embodiment of the data storage method according to the present invention.
Figure 9 is a flow chart illustrating method steps of a further embodiment of the data storage method according to the present invention.
Figure 10 is a flow chart illustrating method steps of a still further embodiment of the data storage method according to the present invention.

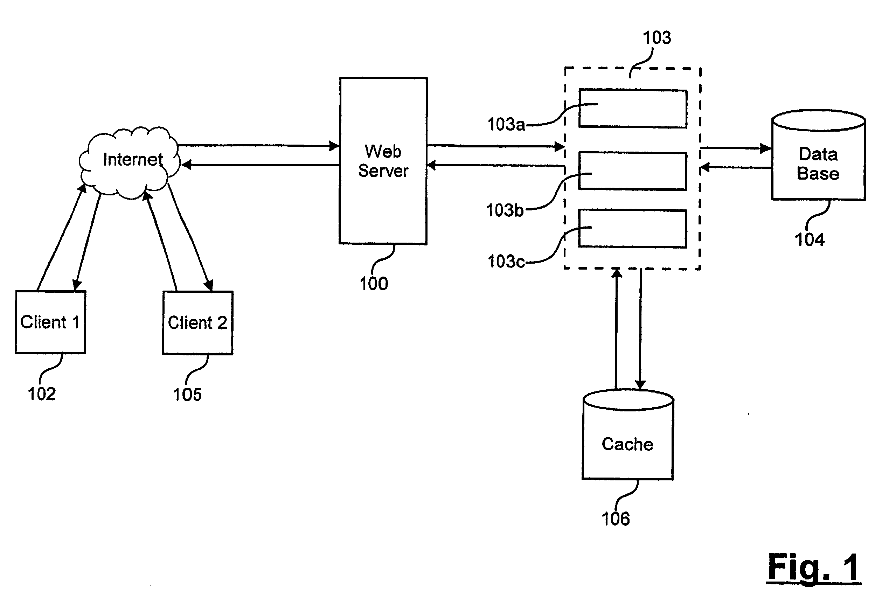

Figure 1 shows a block diagram of a computer system according to the present invention. A web server 100 is connected through a suitable data transfer medium, e.g. the internet with one or a plurality of clients 102, 105. A client may be embodied by a personal computer, a TV set with internet connection, a mobile phone or the like. The web server 100 may be connectable to a large number of clients.

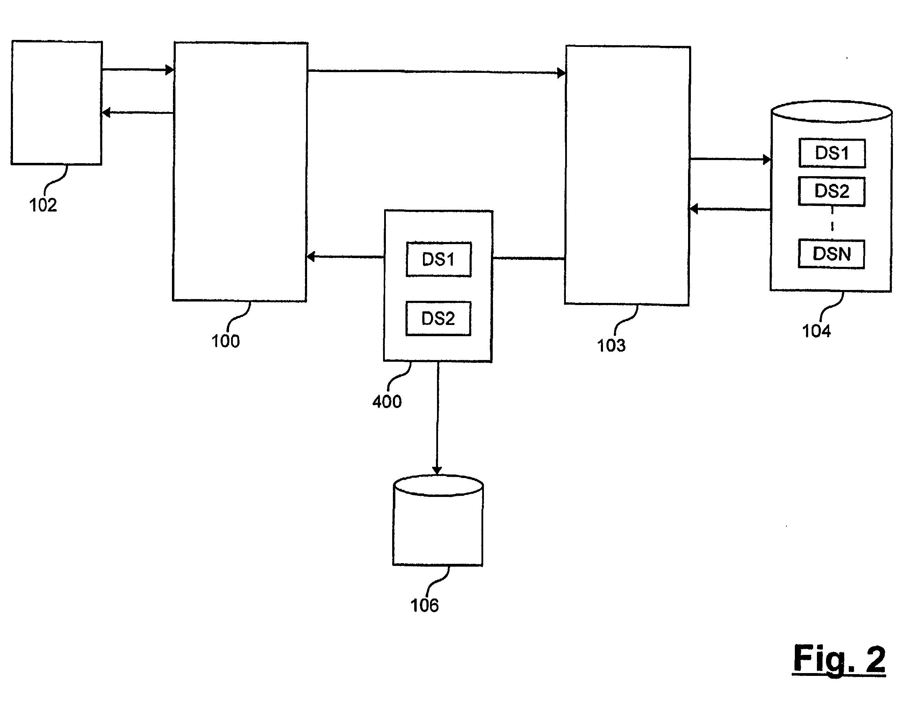

The web server 100 is connected to an application server 103. In the embodiment illustrated in Figure 1 the application server 103 consists of 3 separate devices 103a, 103b and 103c. Any desired number of application servers may be provided in order to adapt the computer system to the required data processing capacity. For simplicity's sake, however, in the following Figures 2 to 5 only one application server 103 is shown. The web server as well as the application server(s) may be embodied by any suitable computing device containing interface means, processing means, storage means like hard discs, RAM-memories, etc. The application server 103 accesses a data base 104 as well as a cache memory 106. Furthermore, the application server 103 carries out the formatting of data for output to a client. The data base 104 may be embodied by any suitable type of data base or file server, preferably adapted for handling a large data volume. The cache memory (or cache) 106 is preferably designed to provide short data access times.

Figure 2 schematically illustrates an operation of temporarily storing data sets DS1, DS2 contained in an output document 400 in cache memory 106. A client 102 requests from web server 100 a number of data sets, for example items of an online shopping catalogue. The web server 100 sends the request to the application server 103 which in turn searches and retrieves requested data sets DS1 and DS2 from data base 104. The data sets DS1 and DS2 are then arranged in an output document or template which may be an HTML-page, a XML or WML document or any other suitable output medium. The output document 400 is then transferred to the web server 100 and subsequently to client 102. Simultaneously, the output document 400 containing data sets DS1 and DS2 is temporarily stored in cache memory 106, which is accessible by the web server 100 as well as by the application server 103.

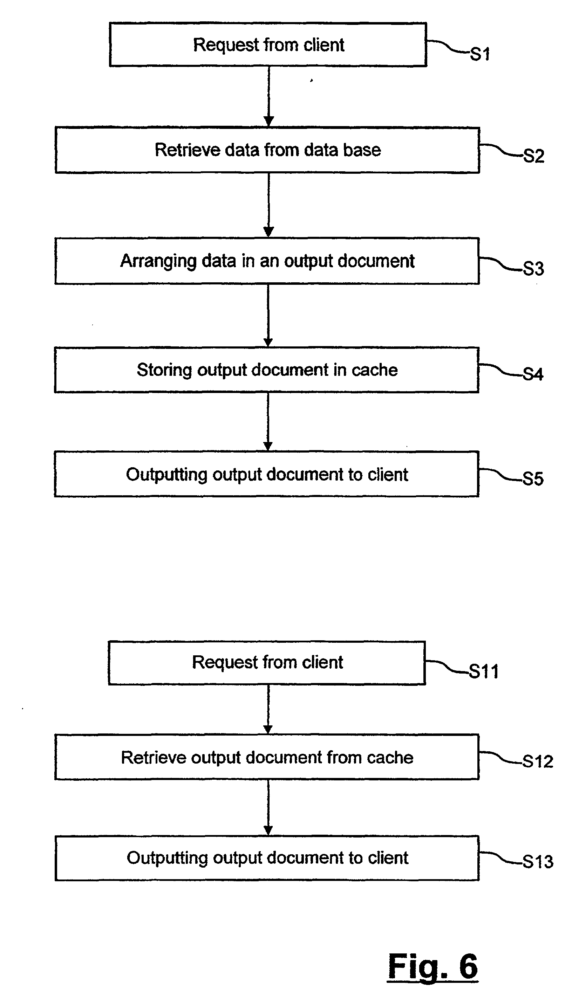

The method steps for performing these operations are schematically illustrated in Figure 6. In step S1 a request from a client is received by web server 100 and transmitted to application server 103, which in turn proceeds with step S2 retrieving the data sets DS1, DS2 from data base 104. The data are then in step S3 arranged in an output document which is stored in the cache memory (step S4) and also outputted to the client (step S5) by the web server 100.

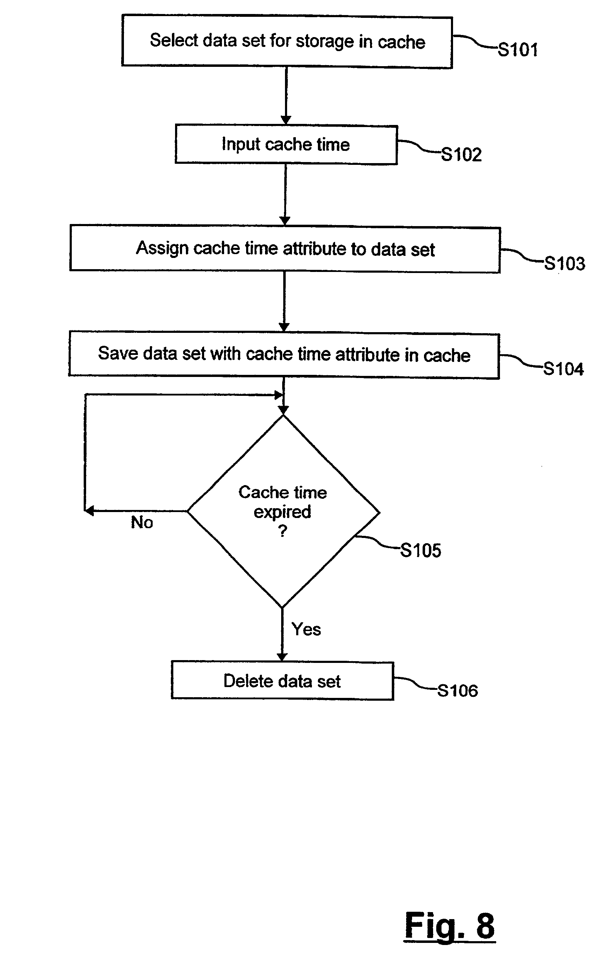

The data sets contained in output document 400 stored into the cache memory 106 are provided with a cache time attribute, which defines the storage period of every data set in cache memory 106. The storage period of output document 400 may be defined in a suitable way depending on the cache time attributes of the data sets contained therein as will be explained herein below referring to Figs. 8 to 10.

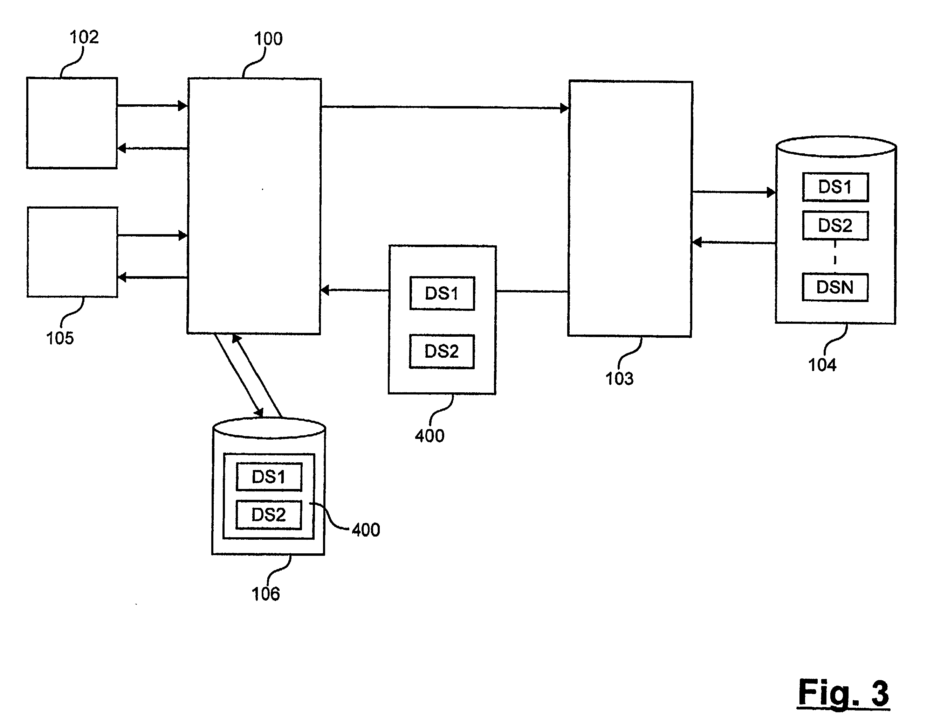

The operation of retrieving an output document from cache 106 is now explained referring to Figures 3 and 6. The same client 102 or another client, here called client 105, requests from web server 100 the data contained in output document 400 (step S11). Web server 100 then checks whether or not the requested data are contained in cache memory 106. If this is the case, output document 400 is retrieved from cache 106 (step S12). This output document is subsequently outputted the client in method step S13.

A variation of the above explained operation will now be explained. Upon a request from a client web server 100 sends the request to the application server 103 which in turn fetches an output document or template which contains an "include" command followed by a URL where the object to be included can be found. The application server requests from the web server this URL and the web server searches in the cache memory 106 under this URL address. If there is an entry in the web server under the URL the content thereof is included in the template for output to the client. If there is no entry in the cache memory 106 the web server 100 transmits the request back to the application server which retrieves the necessary data from the data base and generates the "include" object by carrying out the necessary formatting operations. The "include" object is then transmitted to web server 100 for output to the client. The web server also determines a cache time attribute for the "include" object and stores the same in the cache memory. For the next request the "include" object can be retrieved by the web server directly from the cache memory 106.

The operation of selecting the cache time and assigning the cache time attribute is now explained with reference to Figures 8 to 10.

Figure 8 illustrates a first embodiment of the present invention. In step S101 a data set is selected for storage in the cache memory. Then, according to this embodiment, the cache time is selected manually, i.e. input by the user through suitable input means like a keyboard, a mouse, et cetera. A cache time attribute containing this selected cache time is then assigned to the data set. The cache time attribute may be any information capable of defining a time period. The cache time attribute may define a time in seconds attached to the data set. The cache time may be determined individually for every data set or for specific data set categories. If the cache time is determined for a specific category, the caching time is valid for all data sets which belong to the respective category. The cache time attributes of a plurality of data sets may also be stored in a separate section of the cache memory. The data set may then contain a pointer to the corresponding cache time attribute in this storage section.

A data set may be any suitable arrangement of a data which is handled and forwarded as a data unit. A data set may for example be a catalogue of an online store, price list, et cetera.

The data set is then stored with the cache time attribute in the cache memory (step S104). The data set is held in the cache for the time period defined by the cache time attribute. The data set is held in the cache until the cache time expires (steps S105 and S106).

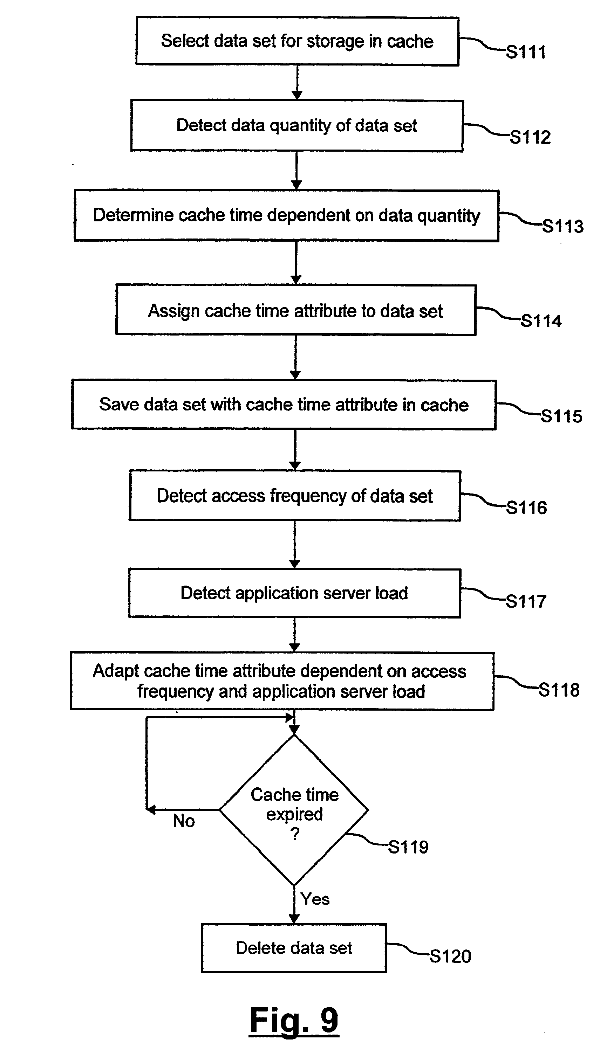

Figure 9 illustrates a second embodiment of a method according to the present invention. In this case, the cache time is not determined manually but selected automatically depending on system parameters. In step S111 the data set for storage in the cache memory is selected and, in step S112, a data quantity of the data set is determined. Dependent on this data quantity the method proceeds to step S113 setting the cache time dependent on the data quantity. In most cases it may be advantageous to assign a long cache time to large data sets and a short cache time to small data sets, because a large data set requires more processing work for the application server. In step S114 the cache time attribute is assigned in the same manner as in the method according to the first embodiment. In step S115 the data set with the cache time attribute is stored in the cache memory.

According to this embodiment, however, the cache time attribute is not defined statically but adapted dynamically dependent on system parameters like the access frequency of the data set or the load of the application server. Within the scope of the present invention the skilled person may select any suitable system parameter influencing the cache time. In method step S116 the access frequency of the data set and in method step S117 the application server load is therefore detected. Subsequently, in method step S118 the cache time attribute is adapted dependent on these parameters detected in the previous steps S116 and S117. Preferably the cache time is made longer if a data set is accessed more frequently. Moreover, the cache time may be increased if the load of the application server is large. In addition, the cache time of a data set may also be adapted dependent on the amount of empty storage space in the cache memory.

In step S119 the expiry of the cache time as defined by the cache time attribute is awaited. If the cache time has expired the method proceeds to step S120 in which the data set is deleted from the cache memory.

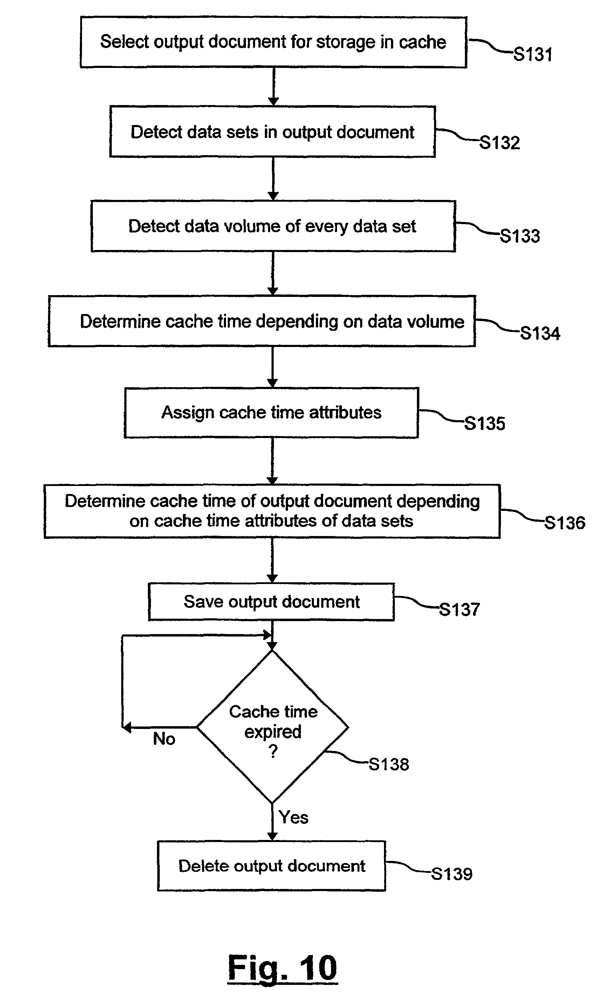

A further embodiment of the data storage method according to the present invention is illustrated in Figure 10. In this embodiment the data sets are not stored separately in the cache memory but arranged in an output document, as has been illustrated in Figures 2 3 and 6. In step S131 an output document is selected for storage in the cache. Then, in step S132, the data sets contained in the output document are detected and the data volume of each data set is determined. The cache time of every data set is then determined depending on the data volume. Consequently, to every data set contained in the output document a cache time attribute is assigned.

Then, in step S136, the cache time of the output document is determined dependent on the cache time attributes of the respective data sets. The cache time of the whole document can be equal to the shortest cache time or to the longest cache time of the data sets contained in the document. Alternatively an average value as an arithmetic average or a geometric average may be chosen. Another possibility is to assign priorities to the respective data sets. For example, a large data set or a frequently requested data set may be assigned a higher priority. The cache time of the whole document may then be selected as the cache time of the data set having the highest priority.

in the next step, method step S137, the output document is saved in the cache memory. In step S138 the expiry of the cache time is awaited. If the time has expired the output document is deleted from the cache memory in step S139.

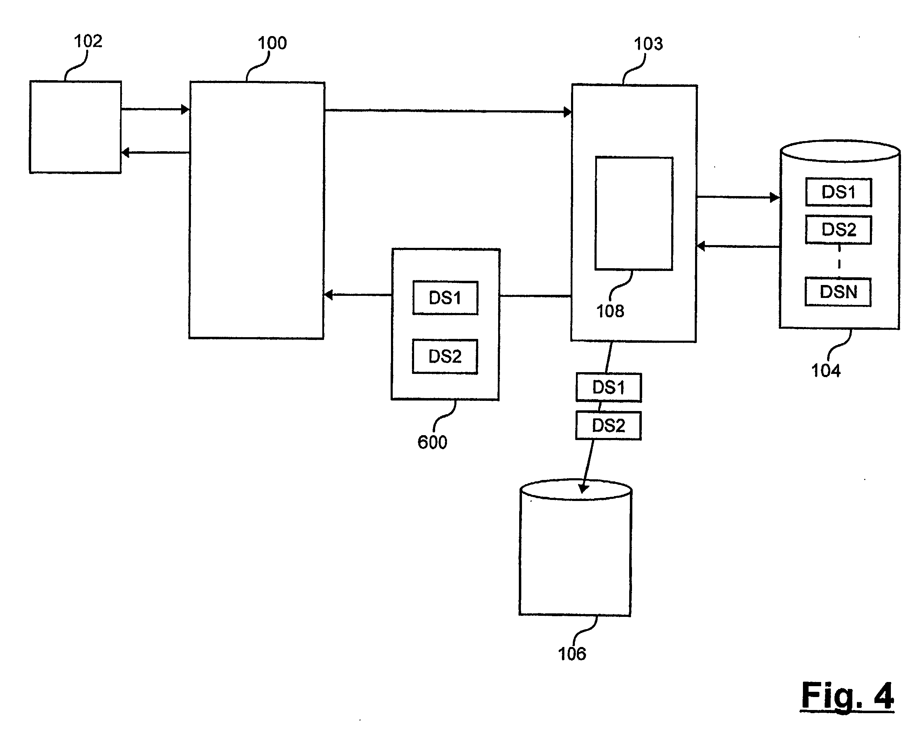

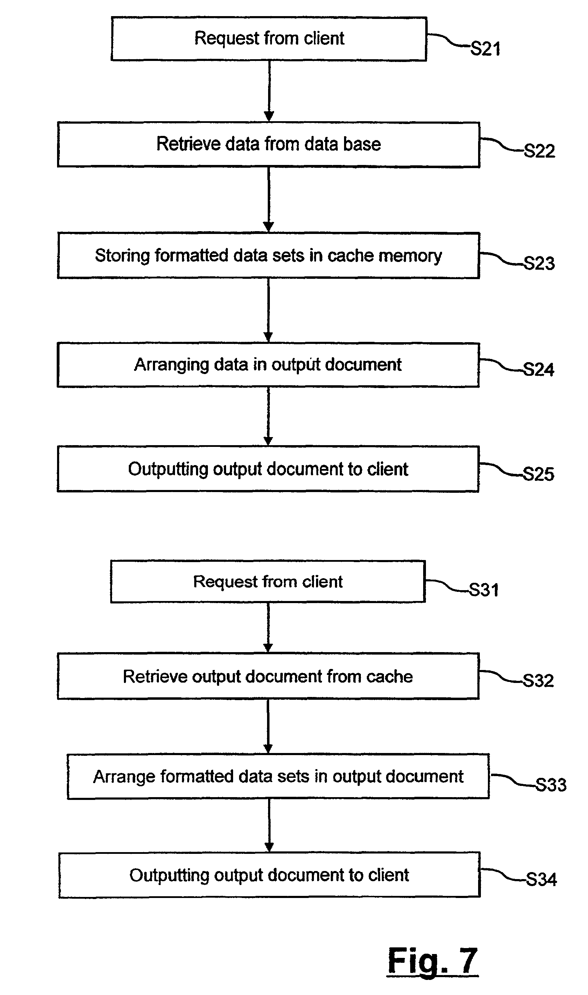

A further mode of operation applying the present invention is now explained with reference to Figures 4, 5 and 7. As in the above described case, client 102 requests from web server 100 data, which are retrieved from the data base (steps S21 and S22 in Figure 7). Before the data, in this example data set DS1 and DS2, are arranged in an output document, the data sets are formatted and in step 23 individually stored in the cache memory by a storage control unit 108 of the application server 103. To every formatted data set a cache time attribute is assigned defining a cache storage period as has been explained above with reference to Figures 8 to 10. In method step S24 the data are arranged in an output document which in turn is outputted to the client in method step S25. It is also possible to carry out, as a background task, the storage of the data sets in different formats, e.g. HTML, XML and WML format. This background task is processed with a lower priority when the application server load is low.

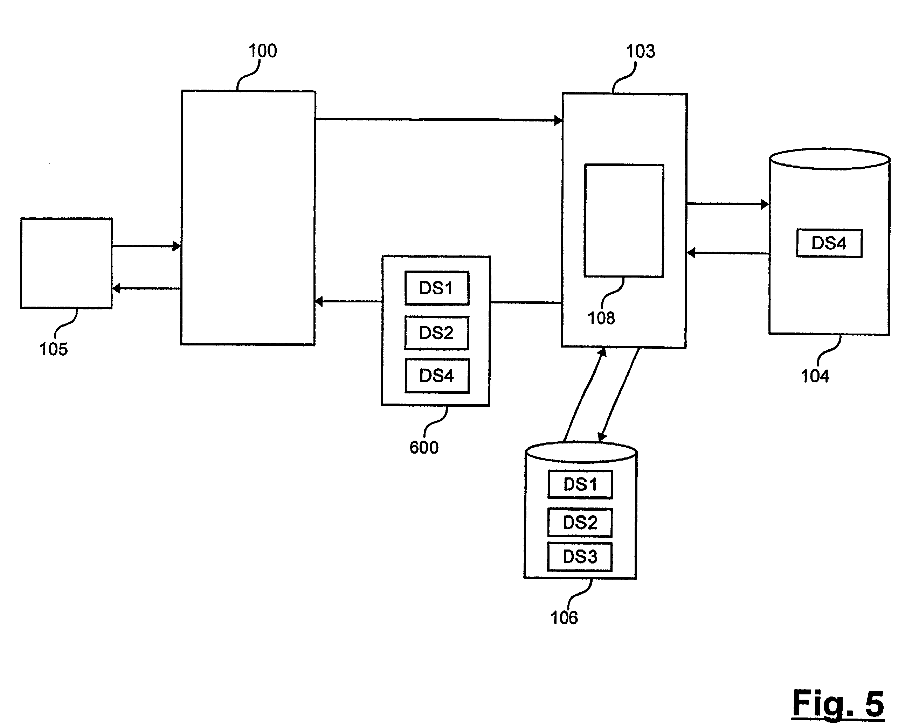

Data retrieval from the cache is illustrated in Figure 5. A client, in this example client 105 requests data including data sets DS1, DS2 and DS4. Whereas formatted data sets DS1 and DS2 are contained in cache memory 106, in the present example data set DS4 is only stored in data base 104. Data sets DS1 and DS2 are consequently retrieved from the cache in method step S32, whereas data set DS4 is fetched from the data base. All data sets are then arranged by the application server 103 in an output document 600 (method step S33), which is subsequently, in step S34, outputted to client 105.

The advantage of the method according to the first processing mode illustrated in Figures 2, 3 and 6 is a short information access time, since the complete output document 400 is stored in the cache 106 and maybe accessed directly by web server 100. It is thus not necessary to arrange the data in an output document. The data can therefore be transferred more quickly to the client. The advantage of the second processing mode illustrated in Figures 4, 5 and 7 is a higher flexibility. In the shown example data set DS4 of the information requested by the client 105 (Figure 5) is only stored in the data base. Data set DS4 may be a small data set requiring only a short retrieval time in the data base and/or a data set which is requested only very infrequently by a client. Data sets DS1 and DS2, however, may be large data sets the retrieval time of which from the data base is therefore long. If only complete output documents are stored in the cache, the request from client 105 in the example shown in Figure 5 had completely to be taken from the data base which would be very time consuming and imposing a lot of processing work to the application server 103. According to the second processing mode of the invention, however, the large and/or frequently requested data sets DS1 and DS2 can be fetched from the cache 106. Since a plurality of clients or users wish to receive different data sets, possibly also in different output formats like HTML, XML or WML (wireless markup language), it is impossible to store the output document for every user in the cache memory. Storing the data sets individually in the cache memory and then arranging the formatted data sets in a suitable output template is thus much more flexible and allows to reduce retrieval times and the load of the application server. With the second mode the individual "time-stamping" of the data sets by the cache time attribute is particularly useful. The cache storage time of every single data set can be selected separately taking into account the data quantity, the access frequency or other parameters. Since the data sets are stored in a formatted or pre-formatted form in the cache memory they can be easily adapted and included into different output templates which saves additional processing load of the application server.

## Claims

1. A data storage method comprising the steps of:
- selecting a data set from a data base (104)
- assigning the selected data set a cache time attribute defining a cache storage period,
- storing the data set in a cache memory (106) for a time period defined by said cache time attribute.

2. The method of claim 1, wherein the cache time attribute is user-defined.

3. The method of claim 1, wherein the cache time attribute is defined by computer system information.

4. The method of claim 3, wherein the cache time attribute is defined dependent on the data volume of the respective data set.

5. The method of claim 3 or 4, wherein the cache time attribute is defined dependent on the access frequency of the respective data set in the cache memory (106).

6. The method of one of claims 3 to 5, wherein the cache time attribute is defined dependent on the load of a computer system.

7. The method of one of claims 3 to 6, wherein the cache time attribute is defined as a fixed value dependent on a data update cycle of the data base (104).

8. The method of one of claims 1 to 7, wherein the cache time attribute is stored together with the data set in the cache memory (106).

9. The method of one of claims 3 to 7, wherein a plurality of data set categories are provided to which respective cache time attributes are assigned.

10. The method of one of claims 1 to 9, wherein every data set is stored separately in the cache memory (106).

11. The method of claim 10, wherein the data set is stored as formatted data set in the cache memory (106).

12. The method of claim 10 or 11, wherein a plurality of data sets are outputted as part of an output document (600).

13. The method of one of claims 1 to 9, wherein a plurality of data sets are stored in the cache memory (106) as part of an output document (400).

14. The method of claim 13, wherein the cache time of an output document (400) is determined by the cache time of the data sets contained therein.

15. The method of claim 14, wherein the shortest cache time of anyone of the data sets is selected as the cache time of the output document (400).

16. The method of claim 14, wherein the longest cache time of anyone of the data sets is selected as the cache time of the output document (400).

17. The method of claim 14, wherein an average cache time among the data sets is selected as the cache time of the output document (400).

18. The method of claim 14, wherein different priorities are assigned to different data sets and the cache time of the data set having the highest priority is selected as the cache time of the output document (400).

19. The method of one of claims 12 to 18, wherein the output document is an HTML, XML or WML document.

20. A load management method of a computer system comprising a web server (100) connectable to a plurality of clients (102, 105) over a data transmission medium, an application server (103), a data base (104) and a cache memory (106), comprising the data storage method as claimed in claim 1.

21. The method of claim 20, wherein the computer system parameters are selected from the computer system load, the access frequency of a respective data set and/or the data volume of a respective data set.

22. A computer program comprising program code adapted to perform the method steps of anyone of claims 1 to 21.

23. The computer program of claim 22 comprising program code adapted for determining the cache time attribute dependent on computer system information.

24. A computer program product stored on a storage medium comprising program code adapted to perform the method steps of anyone of claims 1 to 21.

25. A data structure comprising a plurality of individual data sets which is assigned a cache time attribute defining a cache storage period of the respective data set in a cache memory by performing the method of one of claims 1 to 19.

26. An application server accessing a data base (104) and a cache memory (106) and being adapted to:
- select a data set from the data base (104),
- assign the selected data set a cache time attribute defining a cache storage period,
- store the data set in the cache memory (106) for a time period defined by the cache time attribute.

27. A computer system comprising:
- a web server (100) connectable to a plurality of clients (102, 105) by means of a data transmission medium,
- an application server (103) as claimed in claim 26
- a data base (104), and
- a cache memory (106).

28. The computer system of claim 27, wherein the cache time attribute is user-definable.

29. The computer system of claim 27, wherein the web server (100) and/or the application server (103) defines the cache time attribute dependent on computer system information.

30. A computer system of one of claims 27 to 29, wherein the data sets are categorized into a plurality of data set categories, to which respective cache time attributes are assigned.

31. The computer system according to one of claims 27 to 30, wherein the web server accesses the cache memory (106).

32. The computer system of claim 31, wherein the cache memory (106) stores the data sets as part of an output document (400).

33. The computer system of claim 32, wherein the cache time of the output document (400) is determined by the cache time of the data sets contained therein.

34. The computer system of one of claims 27 to 30, wherein the application server (103) accesses the cache memory (106).

35. The computer system of claim 34, wherein every data set is stored separately in the cache memory (106).

36. The computer system of claim 35, wherein the data sets are stored as formatted data sets in the cache memory (106).

37. The computer system of one of claims 27 to 36, wherein the cache time attribute is stored together with the data set in the cache memory (106).

38. The computer system of one of claims 27 to 36, wherein the cache time attributes of a plurality of data sets are stored in a separate section of the cache memory (106) and the data sets contain pointers to the correponding cache time attributes.

## Patentansprüche

1. Datenspeicherverfahren, aufweisend die Schritte:
- Auswählen eines Datensatzes aus einer Datenbank (104),
- Zuweisen eines Cache-Zeit-Attributs zu dem ausgewählten Datensatz, welches Cache-Zeit-Attribut eine Cache-Speicherdauer definiert,
- Speichern des Datensatzes in einem Cache-Speicher (106) für eine Zeitdauer, die durch das Cache-Zeit-Attribut definiert ist.

2. Verfahren nach Anspruch 1, wobei das Cache-Zeit-Attribut benutzerdefiniert ist.

3. Verfahren nach Anspruch 1, wobei das Cache-Zeit-Attribut durch Computersysteminformation definiert ist.

4. Verfahren nach Anspruch 3, wobei das Cache-Zeit-Attribut in Abhängigkeit von der Datenmenge des jeweiligen Datensatzes definiert ist.

5. Verfahren nach Anspruch 3 oder 4, wobei das Cache-Zeit-Attribut in Abhängigkeit der Zugriffsfrequenz auf den jeweiligen Datensatz in dem Cache-Speicher (106) definiert ist.

6. Verfahren nach einem der Ansprüche 3 bis 5, wobei das Cache-Zeit-Attribut in Abhängigkeit von der Auslastung eines Computersystems definiert wird.

7. Verfahren nach einem der Ansprüche 3 bis 6, wobei das Cache-Zeit-Attribut als fester Wert in Abhängigkeit von einem Datenaktualisierungszyklus der Datenbank (104) definiert ist.

8. Verfahren nach einem der Ansprüche 1 bis 7, wobei das Cache-Zeit-Attribut zusammen mit dem Datensatz in dem Cache-Speicher (106) gespeichert wird.

9. Verfahren nach einem der Ansprüche 3 bis 7, wobei mehrere Datensatzkategorien vorgesehen sind, denen jeweilige Cache-Zeit-Attribute zugeordnet werden.

10. Verfahren nach einem der Ansprüche 1 bis 9, wobei jeder Datensatz in dem Cache-Speicher (106) separat gespeichert wird.

11. Verfahren nach Anspruch 10, wobei der Datensatz als formatierter Datensatz in dem Cache-Speicher (106) gespeichert wird.

12. Verfahren nach Anspruch 10 oder 11, wobei mehrere Datensätze als Teil eines Ausgabedokuments (600) ausgegeben werden.

13. Verfahren nach einem der Ansprüche 1 bis 9, wobei mehrere Datensätze in dem Cache-Speicher (106) als Teil eines Ausgabedokuments (400) gespeichert werden.

14. Verfahren nach Anspruch 13, wobei die Cache-Zeit eines Ausgabedokuments (400) durch die Cache-Zeit der darin enthaltenen Datensätze bestimmt wird.

15. Verfahren nach Anspruch 14, wobei die kürzeste Cache-Zeit irgendeines der Datensätze als die Cache-Zeit des Ausgabedokuments (400) gewählt wird.

16. Verfahren nach Anspruch 14, wobei die längste Cache-Zeit eines der Datensätze als die Cache-Zeit des Ausgabedokuments (400) gewählt wird.

17. Verfahren nach Anspruch 14, wobei eine mittlere Cache-Zeit unter den Datensätzen als die Cache-Zeit des Ausgabedokuments (400) gewählt wird.

18. Verfahren nach Anspruch 14, wobei verschiedenen Datensätzen verschiedene Prioritäten zugewiesen werden und die Cache-Zeit des Datensatzes mit der höchsten Priorität als die Cache-Zeit des Ausgabedokuments (400) gewählt wird.

19. Verfahren nach einem der Ansprüche 12 bis 18, wobei das Ausgabedokument ein HTML-, XML- oder WML-Dokument ist.

20. Lastmanagementverfahren für ein Computersystem aufweisend einen Web-Server (100), der mit mehreren Clients (102, 105) über ein Datenübertragungsmedium verbindbar ist, einen Applikationsserver (103), eine Datenbank (104) und einen Cache-Speicher (106), aufweisend ein Datenspeicherverfahren wie in Anspruch 1 beansprucht.

21. Verfahren nach Anspruch 20, wobei die Computersystemparameter ausgewählt sind aus der Auslastung des Computersystems, der Zugriffsfrequenz auf einen jeweiligen Datensatz und/oder der Datenmenge des entsprechenden Datensatzes.

22. Computerprogramm aufweisend Programmcode ausgebildet zur Ausführung der Verfahrensschritte einer der Ansprüche 1 bis 21.

23. Computerprogramm nach Anspruch 22, aufweisend Programmcode ausgebildet zur Bestimmung eines Cache-Zeit-Attributs abhängig von Computersysteminformationen.

24. Computerprogrammprodukt gespeichert auf einem Speichermedium aufweisend Programmcode ausgebildet zur Ausführung der Verfahrensschritte nach einem der Ansprüche 1 bis 21.

25. Datenstruktur aufweisend mehrere individuelle Datensätze, denen durch Ausführung des Verfahrens nach einem Ansprüche 1 bis 19 ein Cache-Zeit-Attribut zugeordnet ist, welches eine Cache-Speicherdauer des entsprechenden Datensatzes in einem Cache-Speicher bestimmt.

26. Anwendungsserver aufweisend eine Datenbank (104) und einen Cache-Speicher (106), und ausgebildet:
- einen Datensatz aus der Datenbank (104) auszuwählen,
- dem ausgewählten Datensatz ein Cache-Zeit-Attribut zuzuordnen, das eine Cache-Speicherdauer definiert,
- den Datensatz in einem Cache-Speicher für eine durch das Cache-Zeit-Attribut bestimmte Zeitdauer zu speichern.

27. Computersystem aufweisend:
- einen Web-Server (100), der mit mehreren Clients (102, 105) mittels eines Datenübertragungsmediums verbindbar ist.
- einen Anwendungsserver wie in Anspruch 26 beansprucht,
- eine Datenbank (104), und
- einen Cache-Speicher (106).

28. Computersystem nach Anspruch 27, wobei das Cache-Zeit-Attribut benutzerdefinierbar ist.

29. Computersystem nach Anspruch 27, wobei der Web-Server (100) und/oder der Anwendungsserver (103) das Cache-Zeit-Attribut abhängig von Computersysteminformation definiert.

30. Computersystem nach einem der Ansprüche 27 bis 29, wobei die Datensätze in mehrere Datensatzkategorien kategorisiert sind, welchen jeweilige Cache-Zeit-Attribute zugeordnet sind.

31. Computersystem nach einem der Ansprüche 27 bis 30, wobei der Web-Server auf den Cache-Speicher (106) zugreift.

32. Computersystem nach Anspruch 31, wobei der Cache-Speicher (106) die Datensätze als Teil eines Ausgabedokuments (400) speichert.

33. Computersystem nach Anspruch 32, wobei die Cache-Zeit des Ausgabedokuments (400) definiert ist durch die darin enthaltenen Datensätze.

34. Computersystem nach einem der Ansprüche 27 bis 30, wobei der Anwendungsserver (103) auf den Cache-Speicher (106) zugreift.

35. Computersystem nach Anspruch 34, wobei jeder Datensatz separat im Cache-Speicher (106) gespeichert ist.

36. Computersystem nach Anspruch 35, wobei die Datensätze als formatierte Datensätze in dem Cache-Speicher (106) gespeichert werden.

37. Computersystem nach einem der Ansprüche 27 bis 36, wobei das Cache-Zeit-Attribut zusammen mit dem Datensatz in dem Cache-Speicher (106) gespeichert wird.

38. Computersystem nach einem der Ansprüche 27 bis 36, wobei die Cache-Zeit-Attribute mehrerer Datensätze in einem separaten Abschnitt des Cache-Speichers (106) gespeichert werden und die Datensätze Zeiger zu den entsprechenden Cache-Zeit-Attributen enthalten.

## Revendications

1. Procédé de mémorisation de données, comprenant les étapes consistant :
- à sélectionner un ensemble de données à partir d'une base de données (104)
- à assigner, à l'ensemble de données sélectionné, un attribut de temps de mémorisation en mémoire cache définissant une période de mémorisation en mémoire cache,
- à mémoriser l'ensemble de données dans une mémoire cache (106) pendant une période de temps définie par ledit attribut de temps de mémorisation en mémoire cache.

2. Procédé selon la revendication 1, dans lequel l'attribut de temps de mémorisation en mémoire cache est défini par l'utilisateur.

3. Procédé selon la revendication 1, dans lequel l'attribut de temps de mémorisation en mémoire cache est défini par des informations du système d'ordinateur.

4. Procédé selon la revendication 3, dans lequel l'attribut de temps de mémorisation en mémoire cache est défini en fonction du volume de données de l'ensemble de données respectif.

5. Procédé selon la revendication 3 ou 4, dans lequel l'attribut de temps de mémorisation en mémoire cache est défini en fonction de la fréquence d'accès à l'ensemble de données respectif dans la mémoire cache (106).

6. Procédé selon l'une des revendications 3 à 5, dans lequel l'attribut de temps de mémorisation en mémoire cache est défini en fonction de la charge d'un système d'ordinateur.

7. Procédé selon l'une des revendications 3 à 6, dans lequel l'attribut de temps de mémorisation en mémoire cache est défini en tant que valeur fixe en fonction d'un cycle d'actualisation des données de la base de données (104).

8. Procédé selon l'une des revendications 1 à 7, dans lequel l'attribut de temps de mémorisation en mémoire cache est mémorisé conjointement avec l'ensemble de données dans la mémoire cache (106).

9. Procédé selon l'une des revendications 3 à 7, dans lequel une pluralité de catégories d'ensembles de données sont établies, auxquelles sont assignés des attributs de temps de mémorisation en mémoire cache respectifs.

10. Procédé selon l'une des revendications 1 à 9, dans lequel chaque ensemble de données est mémorisé séparément dans la mémoire cache (106).

11. Procédé selon la revendication 10, dans lequel l'ensemble de données est mémorisé en tant qu'ensemble de données formatées dans la mémoire cache (106).

12. Procédé selon la revendication 10 ou 11, dans lequel une pluralité d'ensembles de données sont fournis en tant que partie d'un document de sortie (600).

13. Procédé selon l'une des revendications 1 à 9, dans lequel une pluralité d'ensembles de données sont mémorisés dans la mémoire cache (106) en tant que partie d'un document de sortie (400).

14. Procédé selon la revendication 13, dans lequel le temps de mémorisation en mémoire cache d'un document de sortie (400) est déterminé par le temps de mémorisation en mémoire cache des ensembles de données qui y sont contenus.

15. Procédé selon la revendication 14, dans lequel le temps de mémorisation en mémoire cache le plus court de l'un quelconque des ensembles de données est sélectionné en tant que le temps de mémorisation en mémoire cache du document de sortie (400).

16. Procédé selon la revendication 14, dans lequel le temps de mémorisation en mémoire cache le plus long de l'un quelconque des ensembles de données est sélectionné en tant que le temps de mémorisation en mémoire cache du document de sortie (400).

17. Procédé selon la revendication 14, dans lequel un temps de mémorisation en mémoire cache moyen parmi les ensembles de données est sélectionné en tant que le temps de mémorisation en mémoire cache du document de sortie (400).

18. Procédé selon la revendication 14, dans lequel différentes priorités sont assignées à différents ensembles de données et le temps de mémorisation en mémoire cache de l'ensemble de données ayant la priorité la plus élevée est sélectionné en tant que le temps de mémorisation en mémoire cache du document de sortie (400).

19. Procédé selon l'une des revendications 12 à 18, dans lequel le document de sortie est un document HTML, XML ou WML.

20. Procédé de gestion de la charge d'un système d'ordinateur comprenant un serveur Web (100) pouvant être connecté à une pluralité de clients (102, 105) au travers d'un support de transmission de données, un serveur d'application (103), une base de données (104) et une mémoire cache (106), comprenant le procédé de mémorisation de données selon la revendication 1.

21. Procédé selon la revendication 20, dans lequel les paramètres du système d'ordinateur sont sélectionnés à partir de la charge du système d'ordinateur, de la fréquence d'accès à un ensemble de données respectif et/ou du volume de données d'un ensemble de données respectif.

22. Programme d'ordinateur comprenant un code de programme conçu pour accomplir les étapes de procédé selon l'une quelconque des revendications 1 à 21.

23. Programme d'ordinateur selon la revendication 22, comprenant un code de programme conçu pour déterminer l'attribut de temps de mémorisation en mémoire cache en fonction des informations du système d'ordinateur.

24. Produit de programme d'ordinateur mémorisé sur un support de mémoire, comprenant un code de programme conçu pour accomplir les étapes de procédé selon l'une quelconque des revendications 1 à 21.

25. Structure de données comprenant une pluralité d'ensembles de données individuels se voyant assigner un attribut de temps de mémorisation en mémoire cache définissant une période de mémorisation en mémoire cache de l'ensemble de données respectif dans une mémoire cache en mettant en oeuvre le procédé selon l'une des revendications 1 à 19.

26. Serveur d'application, accédant à une base de données (104) et à une mémoire cache (106), et étant conçu pour :
- sélectionner un ensemble de données à partir de la base de données (104)
- assigner, à l'ensemble de données sélectionné, un attribut de temps de mémorisation en mémoire cache définissant une période de mémorisation en mémoire cache,
- mémoriser l'ensemble de données dans la mémoire cache (106) pendant une période de temps définie par l'attribut de temps de mémorisation en mémoire cache.

27. Système d'ordinateur, comprenant
- un serveur Web (100) pouvant être connecté à une pluralité de clients (102, 105) au travers d'un support de transmission de données,
- un serveur d'application (103) selon la revendication 26,
- une base de données (104), et
- une mémoire cache (106)

28. Système d'ordinateur selon la revendication 27, dans lequel l'attribut de temps de mémorisation en mémoire cache est défini par l'utilisateur.

29. Système d'ordinateur selon la revendication 27, dans lequel le serveur Web (100) et/ou le serveur d'application (103) définissent l'attribut de temps de mémorisation en mémoire cache en fonction des informations du système d'ordinateur.

30. Système d'ordinateur selon l'une des revendications 27 à 29, dans lequel les ensembles de données sont classés en une pluralité de catégories d'ensembles de données, auxquelles sont assignés des attributs de temps de mémorisation en mémoire cache respectifs.

31. Système d'ordinateur selon l'une des revendications 27 à 30, dans lequel le serveur Web accède à la mémoire cache (106).

32. Système d'ordinateur selon la revendication 31, dans lequel la mémoire cache (106) mémorise les ensembles de données en tant que partie d'un document de sortie (400).

33. Système d'ordinateur selon la revendication 32, dans lequel le temps de mémorisation en mémoire cache du document de sortie (400) est déterminé par le temps de mémorisation en mémoire cache des ensembles de données qui y sont contenus.

34. Système d'ordinateur selon l'une des revendications 27 à 30, dans lequel le serveur d'application (103) accède à la mémoire cache (106).

35. Système d'ordinateur selon la revendication 34, dans lequel chaque ensemble de données est mémorisé séparément dans la mémoire cache (106).

36. Système d'ordinateur selon la revendication 35, dans lequel les ensembles de données sont mémorisés en tant qu'ensembles de données formatées dans la mémoire cache (106).

37. Système d'ordinateur selon l'une des revendications 27 à 36, dans lequel l'attribut de temps de mémorisation en mémoire cache est mémorisé conjointement avec l'ensemble de données dans la mémoire cache (106).

38. Système d'ordinateur selon l'une des revendications 27 à 36, dans lequel les attributs de temps de mémorisation en mémoire cache d'une pluralité d'ensembles de données sont mémorisés dans une section séparée de la mémoire cache (106) et les ensembles de données contiennent des pointeurs aux attributs de temps de mémorisation en mémoire cache correspondants.
